# FASCICULE DE BREVET EUROPEEN

(11) **EP 1 220 419 B1**
(45) Date de publication et mention de la délivrance du brevet: **17.08.2005**
(21) Numéro de dépôt: 01403258.5
(22) Date de dépôt: 14.12.2001
(51) Int. Cl.: H02K 3/28

(54) **Stator de machine électrique tournante comportant dans chaque encoche le même nombre de conducteurs**
Stator einer elektrischen Drehmachine in dessen Nuten jeweils die gleiche Anzahl an Leitern angeordnet ist
Stator of a rotating electrical machine having in each slot the same number of conductor

(30) Priorité: 28.12.2000 FR 0017158
(43) Date de publication de la demande: 03.07.2002
(73) Titulaire: VALEO EQUIPEMENTS ELECTRIQUES MOTEUR, 94017 Creteil (FR)
(72) Inventeur: Faverolle, Pierre, 75020 Paris (FR); Tarrago, Jean-Luc, 94380 Bonneuil Sur Marne (FR); Mipo, Jean-Claude, 94000 Créteil (FR); Huart, David, 75012 Paris (FR); Arrighi, Sébastien, 78000 Versailles (FR); Plasse, Cédric, 92380 Garches (FR)

(56) Documents cités:
- US-A- 4 402 129
- US-A- 4 541 575

## Description

L'invention concerne un stator de machine électrique tournante.

L'invention concerne plus particulièrement un stator de machine électrique tournante comportant un corps cylindrique annulaire muni d'encoches axiales débouchantes dans lesquelles sont agencés des conducteurs électriques de manière à former un bobinage à trois phases électriques, du type dans lequel les conducteurs de chaque phase délimitent une série de spires, ou boucles, reliées électriquement en série formant un enroulement circonférentiel et comportant des branches axiales qui traversent les encoches, le sens du courant électrique étant identique dans toutes les branches axiales d'une même encoche, du type dans lequel les conducteurs de chaque phase occupent une encoche sur trois, du type dans lequel chaque phase comporte à chacune des deux extrémités libres de son enroulement, respectivement une liaison électrique d'entrée et une liaison électrique de sortie, et du type dans lequel les phases du stator sont couplées par l'intermédiaire d'un montage du type en triangle, c'est à dire qu'une première phase a sa liaison électrique d'entrée qui est reliée électriquement à la liaison électrique de sortie d'une troisième phase et a sa liaison électrique de sortie qui est reliée électriquement à la liaison électrique d'entrée d'une deuxième phase, la liaison électrique d'entrée de la troisième phase étant reliée électriquement à la liaison électrique de sortie de la deuxième phase.

Généralement, dans un tel type de stator, le bobinage est du type ondulé simple, comme on l'a représenté sur les figures 1 à 3.

Les figures 1 à 3 sont des schémas qui illustrent un exemple de bobinage du type ondulé simple dans le cadre d'un corps de stator à 12 encoches eₙ.

La figure 1 représente l'enroulement de la phase X et, en trait pointillé, les liaisons d'entrée et de sortie des phases Y et Z.

Les figures 2 et 3 représentent respectivement les enroulements des phases Y et Z.

Chaque phase X, Y, Z est ici constituée d'un enroulement circonférentiel à partir d'un fil électrique qui est enfilé dans les encoches eₙ de la phase X, Y, Z sur le pourtour du corps de stator.

Le fil électrique de la phase X réalise deux tours complets du corps de stator en commençant par l'encoche e1 qui comporte la liaison électrique d'entrée Ex, puis l'encoche e10, puis e7, puis e4, puis de nouveau e1.

Le troisième tour est incomplet puisque l'enroulement s'arrête à l'encoche e4 qui comporte la liaison électrique de sortie Sx.

Le fil électrique de la phase Y est enroulé dans les encoches eₙ du stator de la même manière que pour la phase X, en commençant par l'encoche e3 qui comporte la liaison électrique d'entrée Ey et en terminant par l'encoche e6 qui comporte la liaison électrique de sortie Sy.

Le fil électrique de la phase Z est enroulé dans les encoches eₙ du stator de manière similaire aux précédents, depuis l'encoche e5 jusqu'à l'encoche e8. Mais, à la différence des deux enroulements précédents, l'enroulement de la phase Z se poursuit de l'encoche e8 jusqu'à l'encoche e2, de manière que la liaison de sortie Sz soit associée à l'encoche e2 qui est adjacente à l'encoche e1 comportant la liaison d'entrée Ex de la phase X.

Cet agencement à pour but de faciliter un couplage des phases X, Y, Z par l'intermédiaire d'un montage du type en triangle en rapprochant les liaisons d'entrée E et les liaisons de sortie S qui doivent être reliées électriquement entre elles par paires.

Ainsi, chaque liaison d'entrée E d'une phase X, Y, Z est associée à une encoche eₙ adjacente à l'encoche eₙ contenant la liaison de sortie S de la phase X, Y, Z correspondante du montage triangle.

On constate cependant que ce type de montage oblige à prolonger l'enroulement du fil de la phase Z en commençant un quatrième tour d'enroulement, pour rapprocher sa liaison de sortie Sz de la liaison d'entrée Ex de la phase X.

Par conséquent, les encoches e5 et e2 comportent quatre branches axiales de conducteur.

Comme toutes les encoches eₙ ne reçoivent pas le même nombre de branches axiales de conducteur, le coefficient de remplissage n'est pas optimal, c'est à dire qu'il y a une perte d'espace dans les encoches eₙ ne recevant que trois branches axiales.

Cette perte d'espace se traduit aussi par un encombrement qui n'est pas optimisé.

De plus, la différence entre l'enroulement de la phase Z et l'enroulement des autres phases X, Y rend la fabrication du stator plus complexe puisque l'on doit prévoir deux types d'enroulement différents, ce qui augmente le coût et la durée de la fabrication du stator.

Le document US 4,541,575 décrit un stator ayant un bobinage du type ondulé.

L'invention vise à remédier à ces inconvénients en proposant un stator de machine électrique tournante du type décrit précédemment, caractérisé en ce que l'enroulement de chaque phase comporte une première partie dans laquelle le courant parcourt circonférentiellement le corps de stator dans le sens horaire, et une deuxième partie dans laquelle le courant parcourt circonférentiellement le corps de stator dans le sens anti-horaire, de manière que chaque encoche comporte le même nombre de branches axiales de conducteur.

Grâce au stator selon l'invention, on améliore le coefficient de remplissage des encoches puisque chaque encoche contient le maximum de branches axiales de conducteur.

Le meilleur remplissage des encoches améliore les performances électromagnétiques de la machine électrique, notamment son débit, sa puissance massique et son rendement.

Comme chaque encoche contient le même nombre de conducteurs, les phases sont équilibrées entre elles en termes de résistance et de self.

De plus, on constate que le stator selon l'invention diminue l'intensité des harmoniques parasites, ce qui provoque la diminution de l'intensité des bruits magnétiques.

Les enroulements de chaque phase étant sensiblement identiques, les calories sont mieux réparties dans le stator ce qui permet une optimisation thermique de la machine.

Selon d'autres caractéristiques de l'invention :
- les liaisons d'entrée et de sortie des trois phases sont agencées à la même extrémité axiale du corps de stator ;
- les deux extrémités libres de l'enroulement d'une phase sont issues de deux encoches consécutives de cette phase ;
- pour chaque paire de liaisons, qui est constituée d'une liaison d'entrée et d'une liaison de sortie reliées électriquement, les extrémités libres associées sont issues de deux encoches adjacentes.

D'autres caractéristiques et avantages de l'invention apparaîtront à la lecture de la description détaillée qui suit pour la compréhension de laquelle on se reportera aux dessins annexés dans lesquels :

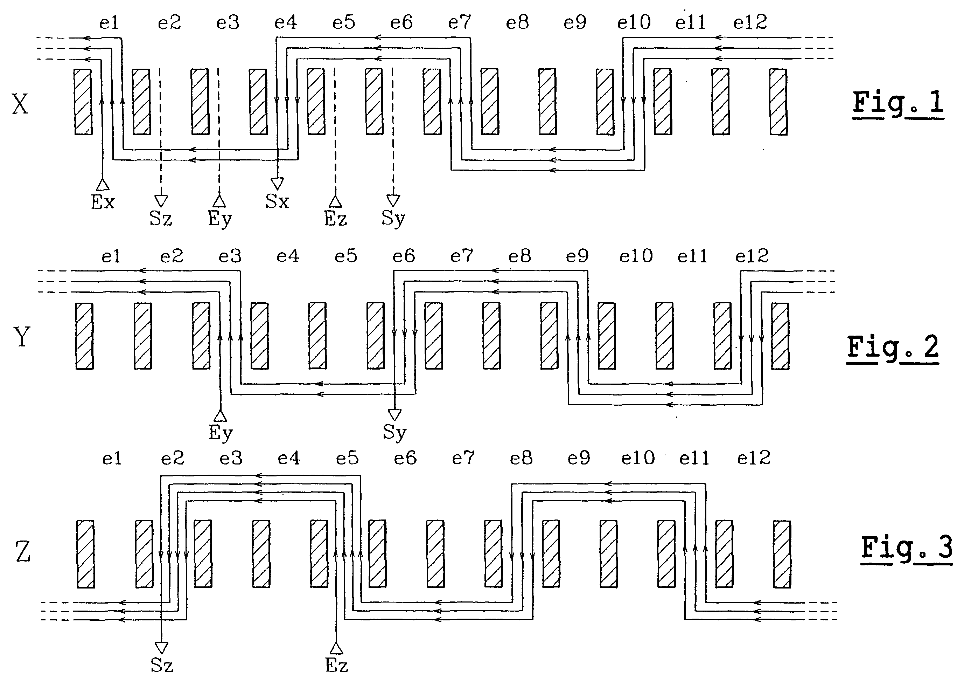

- la figure 1 est un schéma qui représente en développé l'enroulement de la phase X d'un stator selon l'état de la technique ;
- la figure 2 est un schéma similaire au précédent qui représente l'enroulement de la phase Y d'un stator selon l'état de la technique ;
- la figure 3 est un schéma similaire au précédent qui représente l'enroulement de la phase Z d'un stator selon l'état de la technique ;

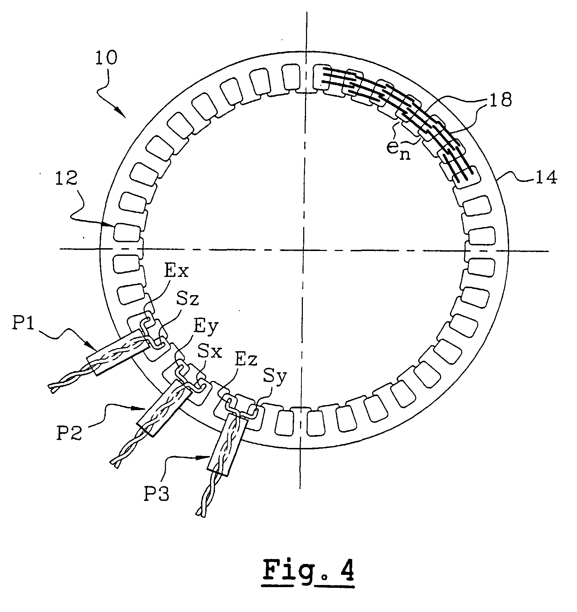

- la figure 4 est un schéma qui représente en vue de dessus un stator réalisé conformément aux enseignements de l'invention ; et

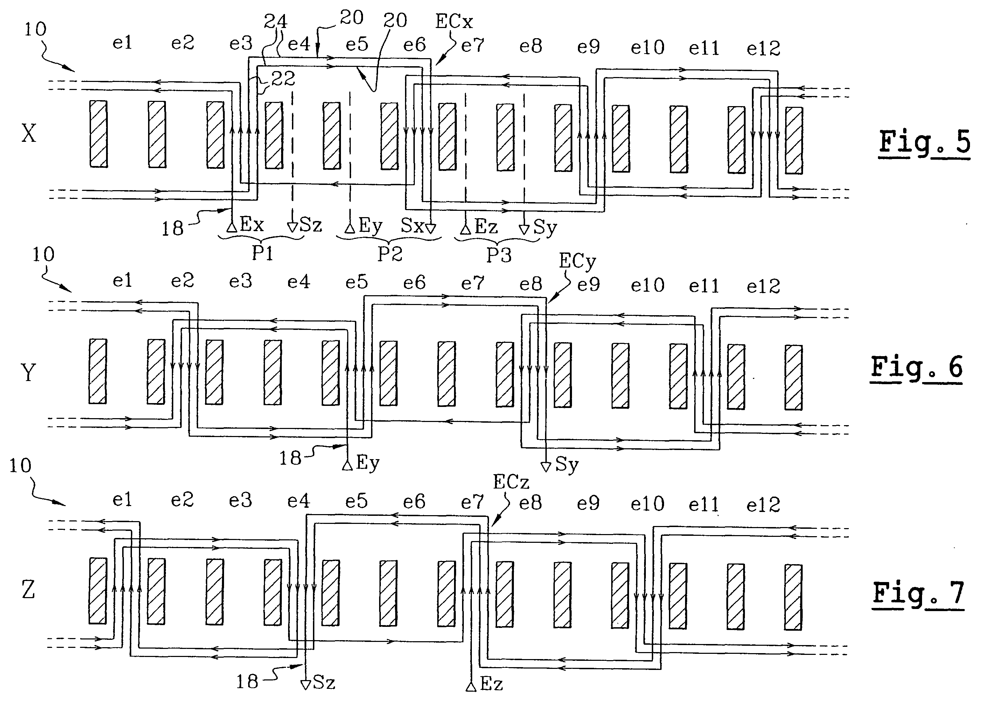

- les figures 5 à 7 sont des schémas similaires aux schémas des figures 1 à 3 et ils représentent respectivement les enroulements des phases X, Y et Z d'un stator réalisé conformément aux enseignements de l'invention.

On a représenté sur la figure 4 un stator 10 de machine électrique tournante comportant un bobinage 12 réalisé conformément aux enseignements de l'invention.

La machine électrique tournante est par exemple un alternateur tel que décrit dans le document EP-B-515.259 auquel on se reportera pour plus de précisions.

Le stator 10 comporte un corps cylindrique annulaire 14 muni d'encoches axiales eₙ débouchantes, par exemple au nombre de 36, dans lesquelles sont agencés des conducteurs électriques 18, ici des fils électriques, de manière à former un bobinage 12 à trois phases électriques notées X, Y, Z.

Les fils électriques 18 sont représentés partiellement et schématiquement.

Pour simplifier la représentation et faciliter la compréhension de l'invention, on a représenté sur les figures 5 à 7 les trois phases électriques X, Y, Z de manière séparée.

Pour chaque phase X, Y, Z, le stator 10 est représenté schématiquement en développé et il comporte un nombre réduit d'encoches axiales eₙ, ici égal à douze, référencées de e1 à e12.

Sur la figure 5, on a représenté en trait pointillé les liaisons d'entrée Ey, Ez et de sortie Sy, Sz des phases Y et Z.

Le fil électrique 18 de chaque phase X, Y, Z délimite une série de spires 20, ou boucles, reliées électriquement en série formant un enroulement circonférentiel EC sur le pourtour du corps 14 de stator 10.

Chaque phase X, Y, Z occupe une encoche eₙ sur trois. On désignera donc par encoches eₙ consécutives, deux encoches eₙ qui sont séparées par deux encoches eₙ adjacentes.

Chaque spire 20 comporte deux branches axiales 22 reliées par une branche transversale 24, les deux branches axiales 22 traversant deux encoches eₙ consécutives de la phase X, Y, Z. Entre deux encoches eₙ consécutives d'une même phase on trouve ici deux autres encoches eₙ dédiées aux deux autres phases.

Le sens du courant électrique est identique dans toutes les branches axiales 22 d'une même encoche eₙ, c'est à dire qu'il est orienté dans une encoche eₙ du haut vers le bas puis dans l'encoche eₙ consécutive du bas vers le haut.

Chacune des deux extrémités libres d'un enroulement EC constitue, respectivement une liaison électrique d'entrée E et une liaison électrique de sortie S.

Avantageusement, les liaisons d'entrée E et de sortie S sont agencées à la même extrémité axiale du stator 10. Cette extrémité est classiquement, dans un alternateur pour véhicule automobile, la plus proche du pont redresseur de l'alternateur.

De plus, la liaison d'entrée E et la liaison de sortie S d'une même phase X, Y, Z sont issues de deux encoches eₙ consécutives d'une même phase X, Y, Z.

Les trois phases X, Y, Z du stator 10 sont prévues pour être couplées par l'intermédiaire d'un montage du type en triangle (non représenté). Par conséquent, la phase X a sa liaison d'entrée Ex qui est reliée électriquement à la liaison de sortie Sz de la phase Z et sa liaison de sortie Sx qui est reliée électriquement à la liaison d'entrée Ey de la phase Y, et la phase Y a sa liaison de sortie Sy qui est reliée électriquement à la liaison d'entrée Ez de la phase Z.

Avantageusement, les enroulements EC sont agencés dans le stator 10 de manière que pour chaque paire P1, P2, P3 de liaisons qui est constituée d'une liaison d'entrée E et d'une liaison de sortie S reliées électriquement ensembles, les extrémités libres associées soient issues de deux encoches eₙ adjacentes.

Conformément aux enseignements de l'invention, l'enroulement EC de chaque phase X, Y, Z comporte une première partie dans laquelle le courant parcourt circonférentiellement le corps 14 de stator 10 dans le sens horaire, et une deuxième partie dans laquelle le courant parcourt circonférentiellement le corps 14 de stator 10 dans le sens anti-horaire, de manière que chaque encoche eₙ comporte le même nombre de branches axiales 22.

Sur les figures 5 à 7, qui représentent le stator 10 en développé, on convient que le sens horaire correspond à une orientation de droite à gauche, et le sens anti-horaire correspond à une orientation de gauche à droite.

On décrira maintenant l'agencement du fil électrique 18 formant l'enroulement ECx de la phase X, en relation avec la figure 5.

L'enroulement ECx est constitué par un fil électrique 18 dont une extrémité libre constitue la liaison d'entrée Ex de la phase X.

Depuis la liaison d'entrée Ex située sous l'encoche e3, dans le sens horaire, le fil 18 passe dans l'encoche e3, puis au-dessus des encoches e2 et e1, puis dans l'encoche e12 puis au-dessous des encoches e11 et e10, puis dans l'encoche e9, puis au-dessus des encoches e7 et e8, puis dans l'encoche e6, puis au-dessous des encoches e4 et e5, puis à nouveau dans l'encoche e3, de manière à former un premier tour de l'enroulement ECx dans le sens horaire.

Le deuxième tour de l'enroulement ECx est similaire et adjacent au premier, mais il se termine dans l'encoche e6.

A partir de l'encoche e6 commence un troisième tour de l'enroulement ECx dans le sens anti-horaire, c'est à dire que le fil 18 passe au-dessous des encoches e7 et e8, puis dans l'encoche e9, puis au-dessus des encoches e10 et e11, puis dans l'encoche e12, puis au-dessous des encoches e1 et e2, puis dans l'encoche e3, puis au-dessus des encoches e4 et e5, puis à nouveau dans l'encoche e6.

Le quatrième tour de l'enroulement ECx est similaire et adjacent au troisième et il se termine dans l'encoche e6 en s'étendant vers le bas pour former la liaison de sortie Sx.

Le courant circule dans l'enroulement ECx de la phase X en entrant par son entrée Ex puis en suivant les deux premiers tours de l'enroulement ECx dans le sens horaire, puis en suivant le troisième et le quatrième tours de l'enroulement ECx dans le sens anti-horaire.

On note que le courant parcourt toutes les branches axiales 22 d'une même encoche eₙ dans le même sens, soit du haut vers le bas, soit du bas vers le haut.

L'enroulement ECx de la phase X comporte le même nombre de branches axiales 22 par encoche en, ici quatre.

On note que ce type d'enroulement EC permet de répartir de manière sensiblement uniforme les branches transversales 24 de la phase X aux deux extrémités axiales du stator 10.

L'enroulement ECy de la phase Y est similaire à celui qui vient d'être décrit en relation avec la phase X, mais ses liaisons d'entrée Ey et de sortie Sy sont associées à des encoches e5, e8 décalées angulairement par rapport aux encoches e3, e6 associées aux liaisons d'entrée Ex et de sortie Sx de la phase X.

La liaison d'entrée Ey de la phase Y s'étend sous l'encoche e5, et sa liaison de sortie Sy s'étend sous l'encoche e8.

L'enroulement ECz de la phase Z est similaire aux précédents, mais il s'en différencie par le fait que les deux premiers tours de l'enroulement ECz commencent d'abord dans le sens anti-horaire, puis les deux derniers tours sont effectués dans le sens horaire.

Ainsi, l'enroulement ECz de la phase Z commence par la liaison d'entrée Ez, qui s'étend sous l'encoche e7, et il se termine par la liaison de sortie Sz, qui s'étend sous l'encoche e4, de manière que la liaison d'entrée Ez de la phase Z soit adjacente à la liaison de sortie Sy de la phase Y, associée à l'encoche e8, et de manière que la liaison de sortie Sz de la phase Z soit adjacente à la liaison d'entrée Ex de la phase X, associée à l'encoche e3.

On remarque que toutes les encoches eₙ de toutes les phases X, Y, Z comportent quatre branches axiales 22 de conducteurs 18.

Grâce au bobinage 12 selon l'invention, et comme on peut le voir sur la figure 4, il est possible de coupler facilement les enroulements EC des trois phases X, Y, Z par un montage du type en triangle, puisque les trois paires P1, P2, P3 de liaisons E, S qui doivent être reliées électriquement ensembles sont toutes adjacentes.

Le stator 10 selon l'invention permet d'utiliser un connecteur (non représenté) simple et économique notamment pour relier les enroulements EC du stator 10 à un pont redresseur (non représenté).

Les paires P1, P2, P3 de liaisons E, S étant adjacentes, on peut utiliser des fils, pour les liaisons d'entrée E et de sortie S, qui sont tous identiques et qui sont plus courts que ceux utilisés habituellement.

On améliore aussi la tenue mécanique du stator 10 car les liaisons d'entrée E et de sortie S des phases X, Y, Z sont droites, comme on le voit sur la figure 4, ce qui évite un encollage, ou l'emploi d'un dispositif de maintien, des liaisons d'entrée E et de sortie S sur le corps 14 de stator 10.

Le stator 10 selon l'invention simplifie encore les opérations de fabrication car le dénudage, le torsadage et l'étamage sont réalisés au cours de la même étape de la fabrication.

Les paires P1, P2, P3 de liaisons E, S étant adjacentes, on diminue le temps de transfert de l'outil qui réalise les connexions, que ce soit par sertissage, par brasage, par soudage ou par un autre moyen.

Grâce à l'invention, la puissance électrique de la machine électrique est augmentée du fait de l'augmentation du taux de remplissage.

## Revendications

1. Stator (10) de machine électrique tournante comportant un corps cylindrique annulaire (14) muni d'encoches axiales (eₙ) débouchantes dans lesquelles sont agencés des conducteurs électriques (18) de manière à former un bobinage (12) à trois phases électriques (X, Y, Z), du type dans lequel les conducteurs (18) de chaque phase délimitent une série de spires (20), ou boucles, reliées électriquement en série formant un enroulement circonférentiel (ECx, ECy, ECz) et comportant des branches axiales (22) qui traversent les encoches (eₙ), le sens du courant électrique étant identique dans toutes les branches axiales (22) d'une même encoche (eₙ), du type dans lequel les conducteurs (18) de chaque phase (X, Y, Z) occupent une encoche (eₙ) sur trois, du type dans lequel chaque phase (X, Y, Z) comporte à chacune des deux extrémités libres de son enroulement (ECx, ECy, ECz), respectivement une liaison électrique d'entrée (Ex, Ey, Ez) et une liaison électrique de sortie (Sx, Sy, Sz), et du type dans lequel les phases (X, Y, Z) du stator (10) sont couplées par l'intermédiaire d'un montage du type en triangle, c'est à dire qu'une première phase (X) a sa liaison électrique d'entrée (Ex) qui est reliée électriquement à la liaison électrique de sortie (Sz) d'une troisième phase (Z) et a sa liaison électrique de sortie (Sx) qui est reliée électriquement à la liaison électrique d'entrée (Ey) d'une deuxième phase (Y), la liaison électrique d'entrée (Ez) de la troisième phase (Z) étant reliée électriquement à la liaison électrique de sortie (Sy) de la deuxième phase (Y),
**caractérisé en ce que** l'enroulement (ECx, ECy, ECz) de chaque phase (X, Y, Z) comporte une première partie dans laquelle le courant parcourt circonférentiellement sur au moins un tour du corps (14) de stator (10) dans le sens horaire, et une deuxième partie dans laquelle le courant parcourt circonférentiellement sur au moins un tour du corps (14) de stator (10) dans le sens anti-horaire, de manière que chaque encoche (eₙ) comporte le même nombre de branches axiales (22) de conducteur
(18), et
**en ce que** les liaisons d'entrée (Ex, Ey, Ez) et de sortie (Sx, Sy, Sz) des trois phases (X, Y, Z) sont agencées à la même extrémité axiale du corps (14) de stator (10), et **en ce que** les deux extrémités libres de l'enroulement (ECx, ECy, ECz) d'une phase (X, Y, Z) sont issues de deux encoches (eₙ) consécutives de cette phase (X, Y, Z), et
**en ce que** pour chaque paire (P1, P2, P3) de liaisons (Ex, Ey, Ez, Sx, Sy, Sz), qui est constituée d'une liaison d'entrée (Ex, Ey, Ez) et d'une liaison de sortie (Sx, Sy, Sz) reliées électriquement, les extrémités libres associées sont issues de deux encoches (eₙ) adjacentes.

## Claims

1. Stator (10) for a rotary electrical machine comprising an annular cylindrical body (14) provided with emerging axial notches (eₙ) in which electrical conductors (18) are arranged so as to form a winding (12) with three electrical phases (X, Y, Z), of the type in which the conductors (18) of each phase delimit a series of turns (20), or loops, electrically connected in series forming a circumferential winding (ECx, ECy, ECz) and comprising axial branches (22) which pass through the notches (eₙ), the direction of the electrical current being identical in all the axial branches (22) of the same notch (eₙ), of the type in which the conductors (18) of each phase (X, Y, Z) occupy one notch (eₙ) out of three, of the type in which each phase (X, Y, Z) has at each of the two free ends of its winding (ECx, ECy, ECz) respectively an input electrical connection (Ex, Ey, Ez) and an output electrical connection (Sx, Sy, Sz), and of the type in which the phases (X, Y, Z) of the stator (10) are coupled by means of circuitry of the Delta type, that is to say a first phase (X) has its input electrical connection (Ex) electrically connected to the output electrical connection (Sz) of a third phase (Z) and its output electrical connection (Sx) electrically connected to the input electrical connection (Ey) of a second phase (Y), the input electrical connection (Ez) of the third phase (Z) being electrically connected to the output electrical connection (Sy) of the second phase (Y),
**characterised in that** the winding (ECx, ECy, ECz) of each phase (X, Y, Z) has a first part in which the current passes circumferentially over at least one turn of the body (14) of the stator (10) in the clockwise direction, and a second part in which the current passes circumferentially over at least one turn of the body (14) of the stator (10) in the anticlockwise direction, so that each notch (eₙ) has the same number of axial branches (22) of a conductor (18), and **in that** the input (Ex, Ey, Ez) and output (Sx, Sy, Sz) connections of the three phases (X, Y, Z) are arranged at the same axial end of the body (14) of the stator (10), and **in that** the two free ends of the winding (ECx, ECy, ECz) of a phase (X, Y, Z) issue from two consecutive notches (eₙ) of this phase (X, Y, Z), and **in that**, for each pair (P1, P2, P3) of connections (Ex, Ey, Ez, Sx, Sy, Sz), which is formed by an input connection (Ex, Ey, Ez) and an output connection (Sx, Sy, Sz) electrically connected, the associated free ends issue from two adjacent notches (eₙ).

## Patentansprüche

1. Stator (10) einer rotierenden elektrischen Maschine mit einem ringförmigen zylindrischen Körper (14) mit durchgehenden axialen Nuten (eₙ), in denen elektrische Leiter (18) angeordnet sind, so dass sie eine Spule (12) mit drei elektrischen Phasen (X, Y, Z) bilden, wobei die Leiter (18) jeder Phase eine Reihe von elektrisch in Reihe verbundenen Windungen (20) oder Schleifen begrenzen, die eine Umfangswicklung (ECx, ECy, ECz) bilden und axiale Stränge (22) umfassen, welche durch die Nuten (eₙ) hindurchgehen, wobei die Richtung des elektrischen Stroms in allen axialen Strängen (22) ein und derselben Nut (eₙ) identisch ist, wobei die Leiter (18) jeder Phase (X, Y, Z) eine von drei Nuten (eₙ) belegen, wobei jede Phase (X, Y, Z) an jedem der beiden freien Enden ihrer Wicklung (ECx, ECy, ECz) eine elektrische Eingangsverbindung (Ex, Ey, Ez) bzw. eine elektrische Ausgangsverbindung (Sx, Sy, Sz) umfasst und wobei die Phasen (X, Y, Z) des Stators (10) über eine Schaltung in der Ausführung als Dreieckschaltung geschaltet sind, das heißt, dass eine erste Phase (X) ihre elektrische Eingangsverbindung (Ex) hat, die elektrisch an die elektrische Ausgangsverbindung (Sz) einer dritten Phase (Z) angeschlossen ist, und ihre elektrische Ausgangsverbindung (Ex) hat, die elektrisch an die elektrische Eingangsverbindung (Ey) einer zweiten Phase (Y) angeschlossen ist, wobei die elektrische Eingangsverbindung (Ez) der dritten Phase (Z) elektrisch an die elektrische Ausgangsverbindung (Sy) der zweiten Phase angeschlossen (Y) ist,
**dadurch gekennzeichnet, dass** die Wicklung (ECx, ECy, ECz) jeder Phase (X, Y, Z) einen ersten Teil, in dem der Strom den Körper (14) des Stators (10) in Umfangsrichtung auf wenigstens einem Umlauf im Uhrzeigersinn durchfließt, und einen zweiten Teil umfasst, in dem der Strom den Körper (14) des Stators (10) in Umfangsrichtung auf wenigstens einem Umlauf gegen den Uhrzeigersinn durchfließt, so dass jede Nut (eₙ) die gleiche Anzahl von axialen Strängen (22) des Leiters (18) umfasst, und **dass** die Eingangs- (Ex, Ey, Ez) und Ausgangsverbindungen (Sx, Sy, Sz) der drei Phasen (X, Y, Z) am gleichen axialen Ende des Körpers (14) des Stators (10) angeordnet sind und **dass** die beiden freien Enden der Wicklung (ECx, ECy, ECz) einer Phase (X, Y, Z) aus zwei aufeinanderfolgenden Nuten (eₙ) dieser Phase (X, Y, Z) kommen und **dass** bei jedem Paar (P1, P2, P3) von Verbindungen (Ex, Ey, Ez, Sx, Sy, Sz), das aus einer Eingangsverbindung (Ex, Ey, Ez) und aus einer Ausgangsverbindung (Sx, Sy, Sz) besteht, die elektrisch verbunden sind, die zugehörigen freien Enden aus zwei benachbarten Nuten (eₙ) kommen.
